# EUROPÄISCHE PATENTANMELDUNG

(11) **EP 4 279 214 A1**
(43) Veröffentlichungstag der Anmeldung: **22.11.2023**
(21) Anmeldenummer: 23173301.5
(22) Anmeldetag: 15.05.2023
(51) Int. Cl.: B24B 3/34, B24B 5/02, B24B 27/00, B24B 25/00, B24B 47/20, B24B 47/22, B24B 35/00, B24B 27/02, B23Q 3/16, B23Q 3/155, B23Q 15/00

(54) **SCHLEIFMASCHINE UND VERFAHREN ZUM BETRIEB EINER SCHLEIFMASCHINE**

(30) Priorität: 17.05.2022 DE 102022112353
(71) Anmelder: Adelbert Haas GmbH, 78647 Trossingen (DE)
(72) Erfinder: Wember, Dirk, 78628 Rottweil (DE); Bader, Thomas, 78559 Gosheim (DE); Endres, Reinhard, 82380 Peißenberg (DE); Schnee, Gerhard, 78588 Denkingen (DE)
(74) Vertreter: Westphal, Mussgnug & Partner Patentanwälte mbB

(57) **Zusammenfassung**

Bereitgestellt werden eine Schleifmaschine (1) mit einem Maschinenbett (10), auf dem eine Werkstückspindel (20) mit einer Werkstückaufnahme (21) und eine Werkzeugspindel (40) mit einer Werkzeugaufnahme so angeordnet sind, dass ein in die Werkstückspindel (20) aufgenommenes Werkstück relativ zu einem in der Werkzeugaufnahme (40) aufgenommenen Werkzeug (41)entlang einer X-Achse, die eine in eine erste Richtung parallel zur Oberfläche des Maschinenbetts (10) verlaufende Achse ist, verfahrbar ist, entlang einer Y-Achse, die eine in eine zweite Richtung parallel zur Oberfläche des Maschinenbetts (10) verlaufende Achse ist, verfahrbar ist, entlang einer Z-Achse, die eine senkrecht zur Oberfläche des Maschinenbetts (10) verlaufende Achse ist, verfahrbar ist, um eine A-Achse, die eine parallel zur Oberfläche des Maschinenbetts (10) verlaufende Achse ist, herum drehbar ist, und um eine C-Achse, die eine senkrecht zur Oberfläche des Maschinenbetts (10) verlaufende Achse ist, herum drehbar ist, bei der die Werkzeugspindel (40) von der Werkstückspindel (20) komplett kinematisch getrennt ist, wobei Bewegungen entlang der X-Achse, um die A-Achse herum und um die C-Achse herum von der Werkstückspindel (20) durchgeführt werden und Bewegungen entlang der Y-Achse und entlang der Z-Achse von der Werkzeugspindel (40) durchgeführt werden sowie ein Verfahren zum Betrieb einer solchen Schleifmaschine (1) .

## Beschreibung

Die Erfindung betrifft eine Schleifmaschine mit den Merkmalen des Oberbegriffs des Anspruchs 1 und ein Verfahren zum Betrieb einer solchen Schleifmaschine.

Schleifmaschinen, wie sie beispielsweise aus der EP 2915622 B1 bekannt sind, ermöglichen eine Bearbeitung von Werkstücken, die sich dadurch auszeichnet, dass sich mit ihr komplexe Oberflächengeometrien mit hoher Präzision herstellen lassen. Gerade weil diese hochpräzise Fertigung ohnehin in vielen Fällen eine nicht unerhebliche Bearbeitungszeit in Anspruch nimmt, ist es von besonderer Bedeutung, einen möglichst hohen Durchsatz von Werkstücken zu erreichen, um kostengünstig und profitabel fertigen zu können.

Die Aufgabe der Erfindung besteht darin, eine Schleifmaschine und ein Verfahren zum Betrieb einer Schleifmaschine bereitzustellen, die es erlauben, den mit der Schleifmaschine erreichbaren Durchsatz zu erhöhen.

Diese Aufgabe wird gelöst durch eine Schleifmaschine mit den Merkmalen des Patentanspruchs 1 und ein Verfahren zum Betrieb einer Schleifmaschinen mit den Merkmalen des Patentanspruchs 12. Vorteilhafte Weiterbildungen der Erfindung sind Gegenstand der jeweiligen abhängigen Ansprüche.

Die erfindungsgemäße Schleifmaschine hat ein Maschinenbett, auf dem eine Werkstückspindel mit einer Werkstückaufnahme und eine Werkzeugspindel mit einer Werkzeugaufnahme so angeordnet sind, dass ein in die Werkstückspindel aufgenommenes Werkstück relativ zu einem in der Werkzeugaufnahme aufgenommenen Schleifwerkzeug, das insbesondere durch ein Schleifscheibenpaket gebildet sein kann,
- entlang einer X-Achse, die eine in eine erste Richtung parallel zur Oberfläche des Maschinenbetts verlaufende Achse ist, verfahrbar ist,
- entlang einer Y-Achse, die eine in eine zweite Richtung parallel zur Oberfläche des Maschinenbetts verlaufende Achse ist, verfahrbar ist,
- entlang einer Z-Achse, die eine senkrecht zur Oberfläche des Maschinenbetts verlaufende Achse ist, verfahrbar ist,
- um eine A-Achse, die eine parallel zur Oberfläche des Maschinenbetts verlaufende Achse ist, herum drehbar ist, und
- um eine C-Achse, die eine senkrecht zur Oberfläche des Maschinenbetts verlaufende Achse ist, herum drehbar ist.

Erfindungswesentlich ist, dass die Werkzeugspindel von der Werkstückspindel komplett kinematisch getrennt ist, wobei Bewegungen entlang der X-Achse, um die A-Achse herum und um die C-Achse herum von der Werkstückspindel (deren Drehachse üblicherweise durch die A-Achse vorgegeben ist bzw. die A-Achse bildet) durchgeführt werden und Bewegungen entlang der Y-Achse und entlang der Z-Achse von der Werkzeugspindel durchgeführt werden.

Diese Art der kinematischen Trennung führt nicht nur dazu, dass die Präzision der Positionierung verbessert werden kann, weil eine Anordnung mit drei aufeinander aufgebauten Linearachsen vermieden wird, sondern erlaubt es zudem, Werkstück und Werkzeug gleichzeitig zu wechseln, so dass der mit der Schleifmaschine erreichbare Werkstückdurchsatz erhöht werden kann, weil die für den Werkzeugwechsel bzw. für den Werkstückwechsel notwendige Bewegung zu den anzufahrenden Wechselpositionen von Werkzeugspindel bzw. Werkstückspindel gleichzeitig durchgeführt werden kann.

Besonders bevorzugt ist es dabei, wenn die Schleifmaschine einen Werkzeugwechsler aufweist. Dieser erlaubt es, einen Werkzeugwechsel vorzunehmen, ohne dass von außen in den Arbeitsraum der Maschine eingegriffen werden muss, wodurch der erreichbare Werkstückdurchsatz weiter erhöht wird.

Wenn ein Werkzeugwechsler vorhanden ist, bringt es unabhängig davon, ob eine kinematische Trennung vorhanden ist und wie die einzelnen Bewegungsfreiheitsgrade der Relativbewegung zwischen Werkstückspindel und Werkzeugspindel aufgeteilt werden Vorteile hinsichtlich der Bearbeitungszeit mit sich, wenn der Werkzeugwechsler gemeinsam mit der Werkzeugspindel bewegbar ist; im Fall der oben erläuterten kinematischen Trennung also entlang der Y-Achse und/oder entlang der Z-Achse bewegbar ist. Dies bringt mit sich, dass nur sehr kleine Fahrwege aus der Schleifposition in die Wechselposition nötig, was zu einem schnellen Werkzeugwechsel beiträgt und somit den erreichbaren Werkstückdurchsatz verbessert.

Besonders bevorzugt ist es dabei, wenn der Werkzeugwechsler um eine BY-Achse, die eine parallel zur Werkzeugspindel verlaufende Achse ist, herum drehbar und in Richtung längs der BY-Achse verfahrbar ist, insbesondere parallel zur Y-Achse. Bei einer solchen Konfiguration kann einfach ein auf der Werkzeugspindel angeordnetes Werkzeug durch Schließen eines während des Betriebs der Werkzeugspindel geöffneten Greifers, der ansonsten bereits an der richtigen Position steht, ergriffen werden. Nach dem Lösen der Spindelklemmung kann dann das Werkzeug durch eine Verschiebung parallel zur BY-Achse ausgehoben werden, durch eine Drehung des Werkzeugwechslers um die BY-Achse herum das neue Werkzeug in Position gebracht werden, das neue Werkzeug durch eine Verschiebung parallel zur BY-Achse in die Werkzeugspindel eingesetzt werden, die Spindelklemmung gespannt und der Greifer geöffnet werden. Dies kann insbesondere den notwendigen Fahrweg für den Werkzeugwechsel auf die Strecke reduzieren, die notwendig ist, um sicherzustellen, dass das Werkzeug beim Ausheben nicht mit dem Werkstück kollidiert.

Insbesondere dann, wenn der Werkzeugwechsler gemeinsam mit der Werkzeugspindel bewegt wird, ist es vorteilhaft, wenn der Werkzeugwechsler mindestens einen Kühlmittelverteiler zur Kühlung eines von der Werkzeugspindel gehaltenen Werkzeugs aufweist und vorteilhafterweise einen für jedes auf dem Werkzeugwechsler vorhandene Werkzeug einen eigenen Kühlmittelverteiler aufweist. Auf diese Weise kann der Kühl- und Schmierstoffstrom beim Schleifen sehr einfach an das jeweils verwendete Werkzeug angepasst werden.

In einer Weiterbildung dieser Ausführungsform ist es vorgesehen, dass Kühlmittelverteiler lösbar am Werkzeugwechsler angeordnet sind, so dass ein Kühlmittelverteiler in Abhängigkeit von dem Werkzeug, das in die entsprechende Halteposition des Werkzeugwechslers eingesetzt wird, individuell ausgetauscht werden kann, um die jeweils optimale Kühlung und Schmierung zu ermöglichen. In diesem Fall ist es vorteilhaft, wenn am Werkzeugwechsler auch ein Sensor zur Überwachung, ob ein Kühlmittelverteiler ordnungsgemäß am Werkzeugwechsler angeordnet ist, vorhanden ist.

Vorteilhafterweise werden die Kühlmittelverteiler dadurch einem jeweiligen Werkzeug zugeordnet, dass der Kühlmittelverteiler bei einer Drehung um die BY-Achse mit dem Werkzeug mitgedreht wird.

Besonders bevorzugten Ausführungsformen der Schleifmaschine werden die X-Achse und die Y-Achse mit Linearmotoren angetrieben. Dadurch wird eine sehr schnelle, kraftvolle aber gelichzeitig hochpräzise regelbare Bewegung entlang dieser Achsen erreicht, so dass die Zeit für die präzise Bewegung auf der Achse zu einem Zielpunkt minimiert werden kann.

Vorteilhaft ist es ferner, wenn jeweils eine eigene pneumatische Ventilinsel der Werkzeugspindel und der Werkstückspindel zugeordnet ist, weil dadurch die Spann- und Entspannvorgänge in der Werkzeug- bzw. Werkstückaufnahme der jeweiligen Spindel besonders schnell ausgeführt werden können.

Wenn die A-Achse bzw. die sie bereitstellende Werkstückspindel mit einem T-Nutentisch zur einer Einheit kombiniert ist, wird ein Freiheitsgrad beim Ausrichten der Werkstückspindel eliminiert, was zu eine Erhöhung erreichbaren der Präzision führt und Unterschiede zwischen auf verschiedenen Exemplaren der erfindungsgegenständlichen Schleifmaschinen hergestellten Werkstücken reduzieren kann.

Die bei Schleifmaschinen in der Regel vorhandene, einen Maschineninnenraum definierende Kabine ist vorzugsweise auf dem Maschinenbett angeordnet und weist vorteilhafterweise Ecktüren auf, die insbesondere vorzugsweise synchron angesteuert aufgefahren und geschlossen werden können. Dies ermöglicht einen besonders guten Zugang zum Maschineninnenraum, der aus mehreren Richtungen erfolgen kann.

Besonders gut lassen sich die Betriebsparameter der Schleifmaschine einstellen, wenn auf der Rückseite der Schleifmaschine eine Wartungsplatte angeordnet ist, auf der Manometer, Regler und/oder Filter angeordnet sind.

Wenn man Kabelkanäle und Leitungen für Erdung, Schmierung, Motorkühlung und/oder Prozesskühlung in das Maschinenbett integriert, sind diese beim Betrieb der Schleifmaschine optimal geschützt; zudem wir die Reinigung des Arbeitsraums, in dem der Schleifprozess erfolgt, vereinfacht.

Zu einer besonders hohen Präzision der Führung einzelner Komponenten der Schleifmaschine kann es beitragen, wenn sämtliche Führungsauflagen des Maschinenbetts in einer Ebene liegen.

Eine integrierte Niveauüberwachung für das Maschinenbett stellt sicher, dass eine Überflutung der Maschine mit Kühl- und Schmierstoff (z.B. wegen einer Verstopfung der Rückförderleitung) vermieden wird.

Zur Nivellierung der Schleifmaschine kann es beitragen, wenn das Maschinenbett aufweist und auf drei Maschinenfüße aufgestellt ist.

Eine besonders effektive Abdichtung einer auf das Maschinenbett aufgesetzten Kabine zur Umgebung hin kann es beitragen, wenn das Maschinenbett eine umlaufende Kante zur Abdichtung zur Kabine aufweist.

Wenn die Schleifmaschine einen Roboter, der insbesondere als Roboterarm ausgeführt sein kann, für den Werkstückwechsel aufweist, kann die für diesen Vorgang benötigte Zeit signifikant reduziert werden. Dabei ist es vorteilhaft, wenn der Roboter außerhalb des Arbeitsraums in einer Automatisierungskabine, die allerdings insbesondere in Richtung auf den Arbeitsraum bzw. Maschineninnenraum hin geöffnet sein kann, angeordnet ist und dass die Werkstückspindel auf der X-Achse in die Automatisierungskabine hineingefahren werden kann, so dass der Roboterarm beim Werkstückwechsel nicht in den Arbeitsraum eingreifen muss. Dies schützt nicht nur den Roboterarm, sondern erlaubt darüber hinaus, das neue Werkstück durch eine schnell und hochpräzise ausführbare Bewegung der Werkstückspindel in x-Richtung abzuholen.

Dafür kann es insbesondere sinnvoll sein, wenn die X-Achse verlängert ist. In einer besonders vorteilhaften Weise kann dies erreicht werden, indem an dem Maschinenbett ein Anbaumodul angeordnet ist, das die X-Achse verlängert und die Automatisierungskabine trägt.

Wenn ein Roboter vorhanden ist, ist es sinnvoll, wenn ein Palettiersystem vorhanden ist, dem der Roboter Werkstückrohlinge entnehmen kann und in dem der Roboter fertig bearbeitete Werkstücke ablegen kann.

Bei dem erfindungsgemäßen Verfahren zum Betrieb einer erfindungsgemäßen Schleifmaschine werden nacheinander in die Werkstückspindel eingespannte Werkstücke mit einem oder mehreren an der Werkzeugspindel eingespannten Schleifwerkzeugen bearbeitet werden. Erfindungsgemäß werden zum Durchführen eines Werkstückwechsels und/oder zum Durchführen eines Werkzeugwechsel die Werkstückspindel und/oder die Werkzeugspindel kinematisch voneinander entkoppelt bewegt, wodurch es ermöglicht wird, sowohl die Werkstückspindel als auch die Werkzeugspindel gleichzeitig an ihre jeweilige Rüstposition, an der sie bestückt oder ihre Bestückung angepasst wird, zu senden.

Besonders bevorzugt ist es dabei, wenn Werkstückwechsel mit einem außerhalb des Arbeitsraums in einer Automatisierungskabine angeordneten Roboter erfolgt, indem die Werkstückspindel mit dem Spannsystem, das die Werkstückaufnahme bildet und dem Werkstück entlang der X-Achse in die Automationskabine gefahren wird. Insbesondere bei Verwendung von Linearmotoren und einem direkten Positionsmessystem ist dies schneller und auch präziser als die Bewegung des Roboters, der zudem auf diese Weise geschützt wird.

Insbesondere können der Roboter und die Werkstückspindel vorpositioniert werden, so dass zur Angabe des bearbeiteten Werkstücks und/oder zur Übernahme des neuen Werkstücks, insbesondere als Rohling, lediglich noch eine Bewegung längs der X-Achse erfolgen muss, so dass die Werkstückspindel mit dem Spannsystem, das die Werkstückaufnahme bildet, und dem Werkstück sofort nach der Bearbeitung in die Automationskabine gefahren werden kann. Dabei kann die A-Achse vor dem Erreichen der Automationskabine durch eine Drehung um die C-Achse parallel oder in einem definierten Winkel zur X-Achse ausgerichtet werden.

Weil die Ansteuerung der X-Achse hochpräzise und mit höherer Präzision als die des Roboters arbeitet, ist es insbesondere vorteilhaft, wenn bei der Aufnahme des nächsten zu bearbeitenden Werkstücks die zum Entnehmen des Werkstücks aus dem Spannsystem, das die Werkstückaufnahme der Werkstückspindel bildet und/oder zum Einführen des nächsten Werkstücks in das Spannsystem, das die Werkstückaufnahme der Werkstückspindel bildet, nötige Bewegung in Richtung der X-Achse durch ein Verfahren der Werkstückspindel entlang der X-Achse erfolgt, insbesondere nachdem der Roboter die richtige Position relativ zur X-Achse eingenommen hat.

Ein besonders zeiteffizienter Werkzeugwechsel wird möglich, wenn bei einem Werkzeugwechsel mit einem Werkezugwechsler die folgenden Schritte ausgeführt werden:
- Schleifscheibenaufnahme greifen,
- Spindelklemmung lösen,
- Werkzeug durch eine Verschiebung parallel zur BY-Achse ausheben,
- Drehung des Werkzeugwechslers um die BY-Achse herum,
- Einsetzen des neuen Werkzeugs durch eine Verschiebung parallel zur BY-Achse,
- Spindelklemmung spannen,
- Greifer öffnen

Die Erfindung wird nachfolgend anhand von Figuren, die Ausführungsbeispiele darstellen, näher erläutert.

Es zeigt:
- Fig. 1:: eine Ansicht eines Ausführungsbeispiel einer Schleifmaschine mit entfernter Kabine, und
- Fig. 2:: einen Blick von oben auf Komponenten der Schleifmaschine aus Figur 1 in Kombination mit einer optionalen Automatisierung durch einen Roboter und einem Palettiersystem

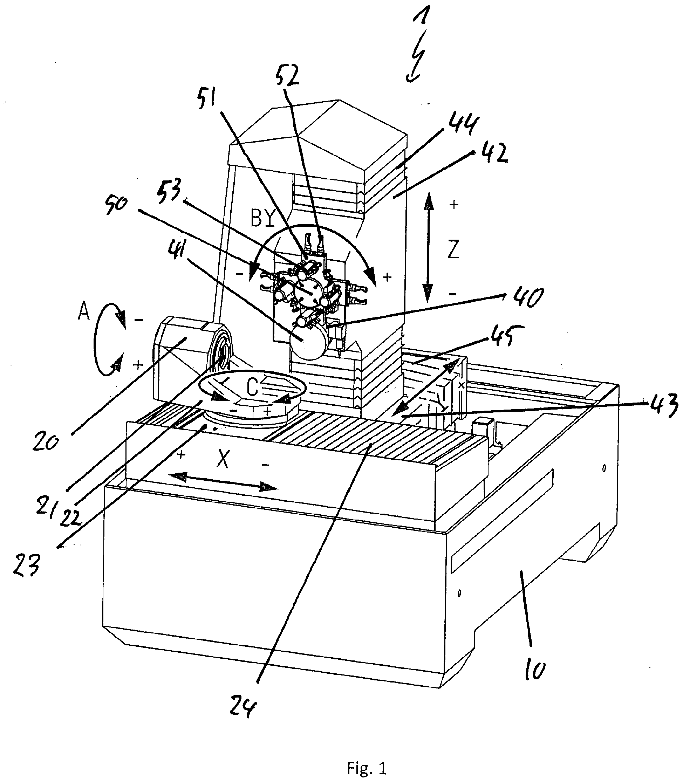

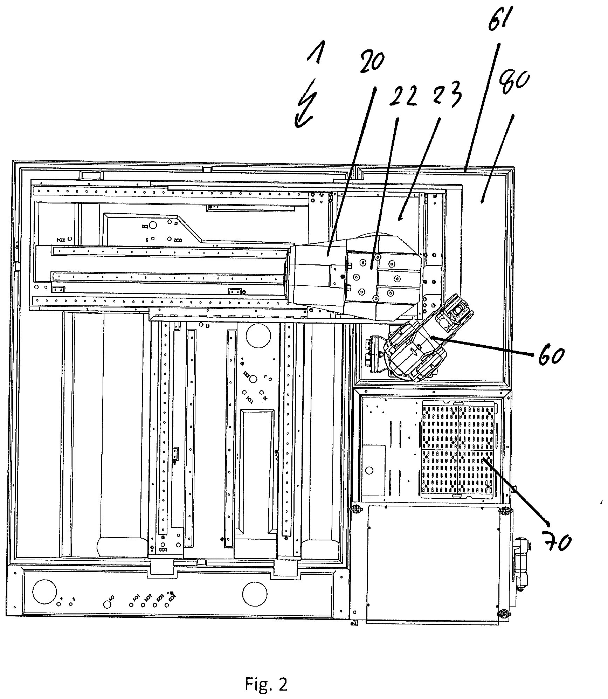

Figur 1 zeigt ein Ausführungsbeispiel einer Schleifmaschine 1, bei dem die Kabine entfernt ist, so dass ein ungehinderter Blick in den Arbeitsraum der Schleifmaschine 1 möglich ist. Ebenfalls nicht in Figur 1 dargestellt ein modulares Automatisierungs- und Palettiersystem, das optional zu der Schleifmaschinen 1 hinzugefügt werden kann und in Figur 2 mit dargestellt ist.

Ein Maschinenbett 10, das im Interesse einer hohen Genauigkeit in Abformtechnik unter Verwendung von Mineralguss zur verbesserten Schwingungsdämpfung gefertigt ist, trägt die Werkstückspindel 20 und die Werkzeugspindel 40.

10 Das Maschinenbett weist ferner integrierte Kabelkanäle, einen durch Schwerkraft getriebenen Ablauf mit einem Auslauf, an dem ein optionales Sieb angeordnet ist, für Kühl- und Schmiermittel, integrierte Leitungen für Schmierung, Motorkühlung, Prozesskühlung und Erdung sowie eine integrierte Niveauüberwachung auf, die allerdings in der Darstellung der Figur 1 nicht erkennbar sind, weil sie durch andere Komponenten verdeckt werden.

Die Werkstückspindel 20, deren in Figur 1 ohne darin aufgenommenes Werkstück dargestellte Werkstückaufnahme 21 die horizontal verlaufende A-Achse der Schleifmaschine 1 definiert, ist in einen T-Nutentisch 22 integriert, der um die vertikal verlaufende C-Achse herum drehbar auf einem Schlitten 23 längs der X-Achse horizontal verfahrbar ist. Der Schlitten 23 läuft auf Schienen, die auf dem Maschinenbett 10 angeordnet sind, die aber in Figur 1 ebenso wie der Linearmotor, der den Schlitten 23 antreibt und das direkte, absolute Messsystem, das seine Position überwacht, unter der Abdeckung 24 liegen und deshalb nicht sichtbar sind.

Die Werkzeugspindel 40, die in der Darstellung der Figur 1 mit einem darin aufgenommenen Werkzeug 41 in Gestalt eines Schleifscheibenpakets dargestellt ist, wird von einem Schlitten 42 getragen, der auf einem vertikal auf einem weiteren Schlitten 43 angeordneten Schienensystem, das eine vertikale Z-Achse definiert, und das ebenso wie der Antrieb und die Positionsüberwachung des Schlittens 41 nicht erkennbar ist, weil es unter der Abdeckung 44 liegt, längs dieser Z-Achse in vertikaler Richtung verfahrbar ist.

Der weitere Schlitten 43 läuft seinerseits auf Schienen, die auf dem Maschinenbett 10 angeordnet sind, die aber in Figur 1 ebenso wie der Linearmotor, der den weiteren Schlitten 43 antreibt und das direkte, absolute Messsystem, das seine Position überwacht, unter der Abdeckung 45 liegen und deshalb nicht sichtbar sind. Diese Schienen definieren die senkrecht zur X-Achse verlaufende, ebenfalls horizontale Y-Achse.

Dementsprechend erkennt man unmittelbar, dass bei der Schleifmaschine 1 die Werkzeugspindel 20 von der Werkstückspindel 40 komplett kinematisch getrennt ist wobei Bewegungen entlang der X-Achse, um die A-Achse herum und um die C-Achse herum von der Werkstückspindel 20 durchgeführt werden und Bewegungen entlang der Y-Achse und entlang der Z-Achse von der Werkzeugspindel 40 durchgeführt werden.

Ebenfalls von dem Schlitten 42 getragen wird ein Werkzeugwechsler 50, der in diesem Fall für insgesamt vier Werkzeuge ausgelegt ist, von denen aber in Figur 1 nur das gerade in die Werkzeugspindel 40 aufgenommene Werkzeug 41 dargestellt ist, um den Aufbau des Werkzeugwechslers 50 in der Figur genauer darzustellen.

Der Werkzeugwechsler 50, der demzufolge gemeinsam mit der Werkzeugspindel in Richtung der Y-Achse und in Richtung der Z-achse bewegt wird, besitzt eine Trägerplatte 51 mit vier kreuzförmig angeordneten, gleich langen Armen, an deren Ende jeweils ein Greifer 52 angeordnet ist, der in bestücktem Zustand ein Werkzeug 41, insbesondere ein Schleifscheibenpaket, trägt. Die Trägerplatte ist um eine parallel zur Y-Achse verlaufende, angetriebene BY-Achse herum drehbar; darüber hinaus kann sie in Richtung parallel zu dieser Achse in die in Figur 1 auf den Betrachter zu verlaufende Richtung bewegt werden.

Dies erlaubt es, das während des Schleifens von der Werkzeugspindel 40 gehaltene Werkzeug 41 wenn ein Werkzeugwechsel notwendig ist mit dem zugehörigen Greifer 52 zu greifen und nach Lösung der Spindelklemmung durch eine lineare Bewegung, die in Figur 1 in Richtung auf den Betrachter zu verläuft, parallel zur BY-Achse auszuheben. Anschließend kann der Werkzeugwechsler beispielsweise um 90° gedreht werden, so dass das vom Greifer 52 des nächsten Arms gehaltene nächste Werkzeug so positioniert wird, dass es durch eine lineare Bewegung, die in Figur 1 in Richtung vom Betrachter weg verläuft, parallel zur BY-Achse in die Werkzeugaufnahme der Werkzeugspindel 40 einzuführen, die Spindelklemmung zu aktivieren und dann mit dem Greifer 52 loszulassen, um mit der Bearbeitung fortfahren zu können. Dieser Greifer 52 bleibt also während der Bearbeitung in einer Position, in der er beim nächsten Werkzeugwechsel nur noch geschlossen werden muss, um das auszuwechselnde Werkzeug 41 zu fassen. Auf diese Weise ist ein sehr schneller Werkzeugwechsel möglich, weil nur minimale Fahrwege zurückgelegt werden müssen.

Eine weitere Besonderheit des Werkzeugwechslers 50, der in Figur 1 gezeigt ist, sind die auswechselbaren Kühlmittelverteiler 53, die jedem der Arme bzw. der Greifer 52 zugeordnet sind. Wie man in Figur 1 erkennt, ist der Kühlmittelverteiler 53 des jeweils in der Werkzeugspindel 40 aufgenommenen Werkzeugs 41 so ausgerichtet, dass beim Schleifprozess das benötigte Kühl- und Schmiermittel direkt an die gewünschte Stelle gesprüht werden kann. Dadurch dass die Kühlmittelverteiler 53 auswechselbar sind, kann also auch bei wechselnder Bestückung des Werkzeugwechslers 50 mit unterschiedlichen Werkzeugen 41 gemeinsam mit jedem Werkzeug 41 unmittelbar ein für den Schleifprozess mit diesem Werkzeug optimierter Kühlmittelverteiler 53 gerüstet werden, was zu einer erheblichen Verbesserung von Kühlung und Schmierung führt. Vorteilhafterweise ist am Werkzeugwechsler 50 jeweils ein Sensor vorgesehen, der überwacht, ob ein zugeordneter Kühlmittelverteiler 53 vorhanden und ordnungsgemäß angeschlossen ist oder nicht. Figur 2 zeigt einen Blick von oben auf Komponenten der Schleifmaschine 1 aus Figur 1 in Kombination mit einer optionalen Automatisierung durch einen Roboter 60 und ein Palettiersystem 70. Weggelassen wurde dabei der gesamte Aufbau, der die Werkzeugspindel 40 und den Werkzeugwechsler trägt, sowie die Abdeckungen 24,44 und 45, so dass zusätzliche Detail des Maschinenbetts, insbesondere die Schienen, die die X-Achse und die Y-Achse definieren, erkennbar sind.

Wie man in Figur 2 erkennt, ist der als Roboterarm ausgeführte Roboter 60 in einer Automatisierungskabine 61 angeordnet, die zum Maschineninnenraum, der an dieser Stelle nicht durch einen Abschnitt einer Kabinenwand begrenzt wird, hin offen ist. Automatisierungskabine 61 und Roboter 60 werden dabei von einem an dem Maschinenbett 10 angeordneten Anbaumodul 80 getragen, das insbesondere, wie man aus der Position der in der Werkstückwechselposition dargestellten Werkstückspindel 20 und des sie tragenden T-Nutentisches 22 sowie des Schlittens 23 ableiten kann, die X-Achse bzw. das sie definierende Schienensystem verlängert.

Auf der dem T-Nutentisch 22 gegenüber liegenden Seite des Roboters 60 befindet sich das Palettiersystem 70. Dementsprechend kann der Roboter 60 durch eine einfache Schwenkbewegung bearbeitete Werkstücke im Palettiersystem 70 ablegen, einen neuen Werkstückrohling zur Fortsetzung der Bearbeitung greifen und der Werkstückspindel 20 zuführen, ohne in den Maschineninnenraum bzw. Arbeitsraum einzugreifen. Besonders vorteilhaft ist es, wenn die Bewegung des Roboters 60 so gestaltet wird, dass der Roboter 60 mit seinem Werkstückgreifer so vorpositioniert wird, dass bei der Übergabe des fertig bearbeiteten Werkstücks der Schlitten 23 einen Abschnitt des noch in der Werkstückaufnahme 21 aufgenommenen Werkstücks in den geöffnete Werkstückgreifer des Roboters 60 hineinfährt, der dieses dann ergreif, ehe es freigegeben wird und bei der Übergabe des nächsten Werkstückrohlings an die Werkstückspindel 20 der Schlitten 23 einen Abschnitt des noch im Werkstückgreifer des Roboters 60 gehaltenen Werkstücks in die geöffnete Werkstückaufnahme 21 der Werkstückspindel 20 hineinfährt, die dieses dann beispielsweise mit einem Dehnspannfutter fixiert, ehe der Werkstückgreifer des Roboters 60 loslässt. Da die Bewegung des Schlittens 23 längs der X-Achse schneller erfolgt und hochpräzise gesteuert ist als die des Roboters 60, wird so nicht nur Zeit gespart, sondern es werden auch Übergabefehler effektiv vermieden.

### Bezugszeichenliste

- 1: Schleifmaschine
- 10: Maschinenbett
- 20: Werkstückspindel
- 21: Werkstückaufnahme
- 22: T-Nutentisch
- 23: Schlitten
- 24: Abdeckung
- 40: Werkzeugspindel
- 41: Werkzeug
- 42: Schlitten
- 43: Schlitten
- 44: Abdeckung
- 45: Abdeckung
- 50: Werkzeugwechsler
- 51: Trägerplatte
- 52: Greifer
- 53: Kühlmittelverteiler
- 60: Roboter
- 61: Automationskabine
- 70: Palettiersystem
- 80: Anbaumodul

## Patentansprüche

1. Schleifmaschine (1) mit einem Maschinenbett (10), auf dem eine Werkstückspindel (20) mit einer Werkstückaufnahme (21) und eine Werkzeugspindel (40) mit einer Werkzeugaufnahme so angeordnet sind, dass ein in die Werkstückspindel (20) aufgenommenes Werkstück relativ zu einem in der Werkzeugaufnahme (40) aufgenommenen Werkzeug (41)
- entlang einer X-Achse, die eine in eine erste Richtung parallel zur Oberfläche des Maschinenbetts (10) verlaufende Achse ist, verfahrbar ist,
- entlang einer Y-Achse, die eine in eine zweite Richtung parallel zur Oberfläche des Maschinenbetts (10) verlaufende Achse ist, verfahrbar ist,
- entlang einer Z-Achse, die eine senkrecht zur Oberfläche des Maschinenbetts (10) verlaufende Achse ist, verfahrbar ist,
- um eine A-Achse, die eine parallel zur Oberfläche des Maschinenbetts (10) verlaufende Achse ist, herum drehbar ist, und
- um eine C-Achse, die eine senkrecht zur Oberfläche des Maschinenbetts (10) verlaufende Achse ist, herum drehbar ist
**dadurch gekennzeichnet, dass** die Werkzeugspindel (40) von der Werkstückspindel (20) komplett kinematisch getrennt ist, wobei Bewegungen entlang der X-Achse, um die A-Achse herum und um die C-Achse herum von der Werkstückspindel (20) durchgeführt werden und Bewegungen entlang der Y-Achse und entlang der Z-Achse von der Werkzeugspindel (40) durchgeführt werden.

2. Schleifmaschine (1) nach Anspruch 1,
**dadurch gekennzeichnet, dass** die Schleifmaschine (1) einen Werkzeugwechsler (50) aufweist, der gemeinsam mit der Werkzeugspindel (40) entlang der Y-Achse und/oder entlang der Z-Achse bewegbar ist.

3. Schleifmaschine (1) nach Anspruch 2,
**dadurch gekennzeichnet, dass** der Werkzeugwechsler (50) um eine BY-Achse, die eine parallel zur Achse der Werkzeugspindel (40) verlaufende Achse ist, herum drehbar und in Richtung längs der BY-Achse verfahrbar ist.

4. Schleifmaschine (1) nach einem der Ansprüche 2 oder 3,
**dadurch gekennzeichnet, dass** der Werkzeugwechsler (50) mindestens einen Kühlmittelverteiler (53) zur Kühlung eines von der Werkzeugspindel (40) gehaltenen Werkzeugs (41) aufweist.

5. Schleifmaschine (1) nach Anspruch 4,
**dadurch gekennzeichnet, dass** der Kühlmittelverteiler (53) lösbar am Werkzeugwechsler (50) angeordnet ist, so dass der Kühlmittelverteiler (53) ausgetauscht werden kann.

6. Schleifmaschine (1) nach einem der Ansprüche 4 bis 6,
**dadurch gekennzeichnet, dass** der Kühlmittelverteiler (53) bei einer Drehung um die BY-Achse mitgedreht wird.

7. Schleifmaschine (1) nach einem der vorstehenden Ansprüche,
**dadurch gekennzeichnet, dass** auf dem Maschinenbett (10) eine Kabine angeordnet ist, die einen Maschineninnenraum definiert, in dem insbesondere die Werkzeugspindel (40) und die Werkstückspindel (20) zur Bearbeitung von Werkstücken angeordnet sind und dass die Kabine Ecktüren aufweist, durch die der Zugang zum Maschineninnenraum möglich ist.

8. Schleifmaschine (1) nach einem der vorstehenden Ansprüche,
**dadurch gekennzeichnet, dass** die Schleifmaschine (1) einen Roboter (60) für den Werkstückwechsel aufweist.

9. Schleifmaschine (1) nach Anspruch 8,
**dadurch gekennzeichnet, dass** der Roboter (60) außerhalb des Arbeitsraums in einer Automatisierungskabine (61) angeordnet ist und dass die Werkstückspindel (20) auf der X-Achse in die Automatisierungskabine (61) hineingefahren werden kann, so dass der Roboterarm (60) beim Werkstückwechsel nicht in den Arbeitsraum eingreift.

10. Schleifmaschine (1) nach Anspruch 9,
**dadurch gekennzeichnet, dass** an dem Maschinenbett (10) ein Anbaumodul (80) angeordnet ist, das die X-Achse verlängert und die Automatisierungskabine (61) trägt.

11. Schleifmaschine (1) nach einem der Ansprüche 8 bis 10,
**dadurch gekennzeichnet, dass** angrenzend zur Automatisierungskabine (61) ein Palettiersystem (70) vorhanden ist.

12. Verfahren zum Betrieb einer Schleifmaschine (1) nach einem der vorstehenden Ansprüche, bei dem nacheinander in die Werkstückspindel (20) eingespannte Werkstücke mit einem oder mehreren an der Werkzeugspindel (40) eingespannten Werkzeugen (41) durch Schleifen bearbeitet werden,
**dadurch gekennzeichnet, dass** zum Durchführen eines Werkstückwechsels und/oder zum Durchführen eines Werkzeugwechsel die Werkstückspindel (20) und/oder die Werkzeugspindel (40) kinematisch voneinander entkoppelt bewegt werden.

13. Verfahren nach Anspruch 12,
**dadurch gekennzeichnet, dass** der Werkstückwechsel mit einem außerhalb des Arbeitsraums in einer Automatisierungskabine (61) angeordneten Roboter (60) erfolgt, indem die Werkstückspindel (20) mit der Werkstückaufnahme (21) und dem Werkstück entlang der X-Achse in die Automationskabine (61) gefahren wird.

14. Verfahren nach Anspruch 13,
**dadurch gekennzeichnet, dass** der Roboter (60) und die Werkstückspindel (20) vorpositioniert werden und die Werkstückspindel (20) mit der Werkstückaufnahme (21) und dem Werkstück sofort nach der Bearbeitung in die Automationskabine (61) gefahren wird.

15. Verfahren nach einem der Ansprüche 13 oder 14,
**dadurch gekennzeichnet, dass** die A-Achse vor dem Erreichen der Automationskabine (61) durch eine Drehung um die C-Achse parallel oder in einem definierten Winkel zur X-Achse ausgerichtet wird.

16. Verfahren nach einem der Ansprüche 13 bis 15,
**dadurch gekennzeichnet, dass** bei der Aufnahme des nächsten zu bearbeitenden Werkstücks die zum Entnehmen des Werkstücks aus der Werkstückaufnahme (21) der Werkstückspindel (20) und/oder zum Einführen des nächsten Werkstücks in die Werkzeugaufnahme (21) der Werkstückspindel (20) nötige Bewegung in Richtung der X-Achse durch ein Verfahren der Werkstückspindel (20) entlang der X-Achse erfolgt.

17. Verfahren nach einem der Ansprüche 12 bis 16,
**dadurch gekennzeichnet, dass** bei einem Werkzeugwechsel die folgenden Schritte ausgeführt werden:
• Werkzeugaufnahme mit einem Greifer (52) greifen,
• Spindelklemmung lösen,
• Werkzeug (41) durch eine Verschiebung parallel zur BY-Achse ausheben,
• Drehung des Werkzeugwechslers (50) um die BY-Achse herum zur Position des neuen Werkzeugs (41),
• Einsetzen des neuen Werkzeugs (41) durch eine Verschiebung parallel zur BY-Achse,
• Spindelklemmung spannen,
• Greifer (52) öffnen.
